# EUROPEAN PATENT APPLICATION

(11) **EP 3 115 441 A1**
(43) Date of publication of application: **11.01.2017**
(21) Application number: 14884715.5
(22) Date of filing: 05.03.2014
(51) Int. Cl.: C10J 3/78, B01J 3/02, B09B 3/00, C02F 11/08

(54) **APPARATUS FOR GASIFICATION WITH SUPERCRITICAL FLUID**

(71) Applicant: The Chugoku Electric Power Co., Inc., Hiroshima-shi, Hiroshima 730-8701 (JP); Hiroshima University, Higashi-Hiroshima-shi Hiroshima 739-8511 (JP); Toyo Koatsu Co., Ltd., Hiroshima 733-0022 (JP)
(72) Inventor: WADA, Yasutaka, Hiroshima-shi Hiroshima 730-8701 (JP); KUBOTA, Haruhito, Hiroshima-shi Hiroshima 730-8701 (JP); YAMAMURA, Yukimasa, Hiroshima-shi Hiroshima 730-8701 (JP); UCHIYAMA, Ichiro, Hiroshima-shi Hiroshima 730-8701 (JP); OYAMA, Keiji, Hiroshima-shi Hiroshima 730-8701 (JP); YAMASAKI, Toshiki, Hiroshima-shi Hiroshima 730-8701 (JP); MATSUMURA, Yukihiko, Higashihiroshima-shi Hiroshima 739-8511 (JP); KAWAI, Yoshifumi, Hiroshima-shi Hiroshima 734-0001 (JP); NOGUCHI, Takashi, Hiroshima-shi Hiroshima 733-0002 (JP)
(74) Representative: Osha Liang
(86) International application number: PCT/JP2014/055696
(87) International publication number: WO 2015/132923

(57) **Abstract**

[PROBLEM] In a gasification apparatus that heats and pressurizes a gasification feedstock to bring the gasification feedstock into a fluid in a supercritical state and performs decomposition-treatment on the gasification feedstock to obtain fuel gas, energy possessed by the treated fluid is effectively utilized, and production of tar is suppressed.

[SOLUTION] A gasification apparatus configured to heat and pressurize a gasification feedstock to bring the gasification feedstock into a supercritical state, and perform decomposition-treatment on the gasification feedstock to obtain fuel gas, the gasification apparatus including: a heat exchanger 31 configured to introduce the gasification feedstock into a low-temperature-side flow channel 31a and introduce treated fluid in a supercritical state into a high-temperature-side flow channel 31b, so that heat exchange is performed between the gasification feedstock and the treated fluid; a gas-liquid separator 51 configured to extract, from the high-temperature-side flow channel 31b, the treated fluid that has been in a subcritical state due to heat exchange, perform gas-liquid separation on the treated fluid, and return a separated liquid to the high-temperature-side flow channel; and a turbine 61 that is powered by fuel gas separated by the gas-liquid separator.

## Description

### [Technical Field]

The present invention relates to a gasification apparatus that heats and pressurizes a gasification feedstock to bring the gasification feedstock into a fluid in a supercritical state and performs decomposition-treatment on the gasification feedstock to obtain fuel gas.

### [Background Art]

Gasification apparatuses are known that perform decomposition-treatment on a gasification feedstock in a supercritical state to obtain fuel gas. For example, Patent Literature 1 describes a biomass gasification power generation system in which biomass slurry containing a non-metal catalyst is subjected to hydrothermal treatment under conditions of a temperature of 374°C or greater and a pressure of 22.1 MPa or greater, power is generated by a power generating device using the produced gas that is produced, and waste heat from the power generating device is used to heat the slurry.

### [Citation List]

### [Patent Literature]

Patent Literature 1: Japanese Patent Application Laid-open Publication No. 2008-246343

### [Summary of Invention]

### [Technical Problem]

In the system of Patent Literature 1, a treated fluid that has been subjected to gasification treatment exchanges heat with the slurry in a double-pipe heat exchanger. The treated fluid thereby transitions from a supercritical state to a subcritical state, and changes from a mixed gas-liquid state to a gas-liquid two-phase flow.

Since the gas-liquid two-phase flow vertically separates, with the gas (such as fuel gas) and the liquid having a volume ratio of approximately 2:8, the energy contained in the treated fluid was not being effectively utilized. For example, in spite of the fact that the gas has physical pressure energy and can also be used as a fuel because the gas contains chemical energy, the heat exchange efficiency has been lowered due to using the gas in heat exchange without gas-liquid separation. Moreover, the treated fluid changes to a gas-liquid two-phase flow between an inner pipe and an outer pipe of an intermediate temperature portion of the double-pipe heat exchanger, whereas the inner pipe from the intermediate temperature portion to a high temperature portion has been a portion which causes a problem that tar is produced.

The present invention has been made in view of the above issue, and an object thereof is to effectively utilize energy contained in treated fluid, and to suppress production of tar.

In order to achieve the above object, the present invention is a gasification apparatus configured to heat and pressurize a gasification feedstock to bring the gasification feedstock into a supercritical state, and perform decomposition-treatment on the gasification feedstock to obtain fuel gas, the gasification apparatus including: a heat exchanger configured to introduce the gasification feedstock into a low-temperature-side flow channel and introduce treated fluid in a supercritical state into a high-temperature-side flow channel, so that heat exchange is performed between the gasification feedstock and the treated fluid; a gas-liquid separator configured to extract, from the high-temperature-side flow channel, the treated fluid that has been in a subcritical state due to heat exchange, perform gas-liquid separation on the treated fluid, and return a separated liquid to the high-temperature-side flow channel; and a turbine that is powered by fuel gas separated by the gas-liquid separator.

According to the present invention, the treated fluid in a subcritical state is extracted from the high-temperature-side flow channel, and is gas-liquid separated. The fuel gas after gas-liquid separation is used as power of the turbine, thereby enabling energy possessed by the fuel gas to be effectively utilized. Moreover, the liquid after gas-liquid separation is returned to the high-temperature-side flow channel, enabling the heat exchange efficiency to be enhanced by the returned liquid. Moreover, since the temperature of the feedstock slurry can be raised in a short period of time, production of tar can be suppressed.

In the gasification apparatus described above, the turbine is preferably rotated by a jet of the fuel gas in a highly pressurized state. In such a configuration, the turbine is rotated by energy of pressure possessed by the fuel gas, then enabling the fuel gas after working to be used as fuel. This thereby enables the energy possessed by the fuel gas to be even more effectively utilized.

In the gasification apparatus described above, the fuel gas after rotating the turbine is preferably used to heat the gasification feedstock. In such a configuration, the gasification feedstock is heated by the fuel gas after the fuel gas rotates the turbine, thereby enabling the energy possessed by the fuel gas to be even more effectively utilized.

In the gasification apparatus described above, the fuel gas after rotating the turbine is preferably burned to be used to rotate the turbine. In such a configuration, the fuel gas after rotating the turbine by the physical energy of pressure is burned to rotate the turbine, and thus power is effectively generated by using the chemical energy possessed by the fuel gas.

In the gasification apparatus described above, it is also preferable that the turbine is rotated by burning the fuel gas in a highly pressurized state. In such a configuration, the gasification feedstock is heated by high-temperature exhaust gas after the exhaust gas rotates the turbine, thereby enabling energy to be even more effectively utilized.

Moreover, in the gasification apparatus described above, it is also preferable that exhaust gas that is obtained by burning the fuel gas and that has been used to rotate the turbine is used to heat the gasification feedstock. In such a configuration, the gasification feedstock is heated by the high temperature exhaust gas after it has been utilized to rotate the turbine, thereby enabling energy to be even more effectively utilized.

According to the present invention, in a gasification apparatus that heats and pressurizes a gasification feedstock to make it into a fluid in a supercritical state and performs decomposition-treatment on the gasification feedstock to obtain fuel gas, energy possessed by the treated fluid can be effectively utilized, and production of tar can be suppressed.

### [Brief Description of Drawings]

[Fig. 1] Fig. 1 is a diagram illustrating a configuration of a supercritical gasification apparatus.
[Fig. 2A] Fig. 2A is a diagram illustrating a configuration of a gas-liquid separator.
[Fig. 2B] Fig. 2B is a diagram illustrating a configuration of a gas-liquid separator.
[Fig. 3A] Fig. 3A is a diagram illustrating a state in a double-pipe heat exchanger before gas-liquid separation.
[Fig. 3B] Fig. 3B is a diagram illustrating a state in a double-pipe heat exchanger after gas-liquid separation.
[Fig. 4] Fig. 4 is a diagram illustrating a configuration of a modified example of a supercritical gasification apparatus.

### [Description of Embodiments]

Embodiments of the present invention will be described below.

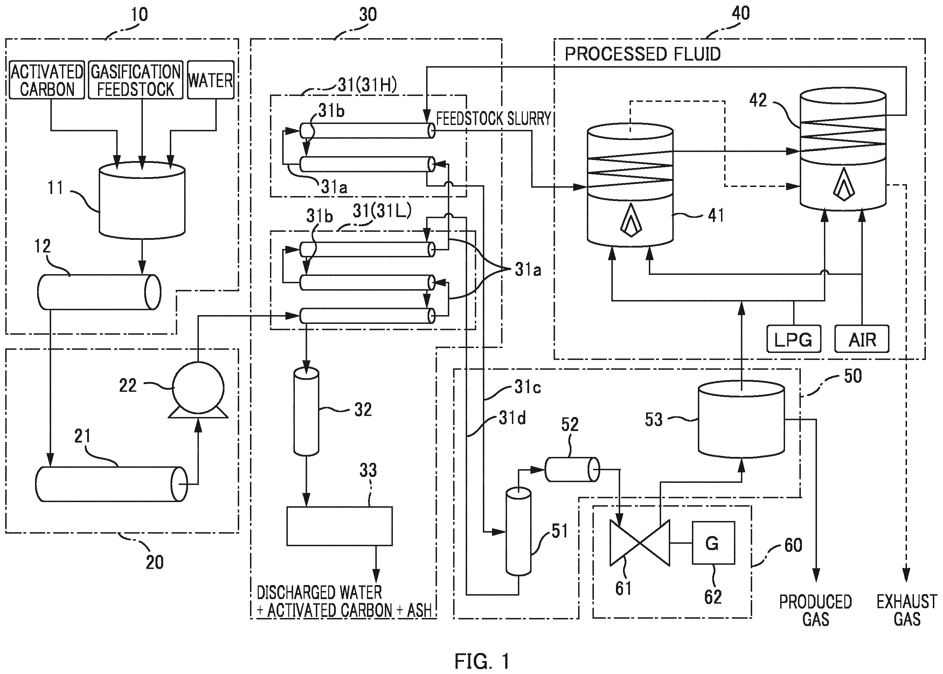

First, an overall configuration of a supercritical gasification apparatus is described with reference to Fig. 1. The exemplified supercritical gasification apparatus includes a feedstock regulation unit 10, a feedstock supply unit 20, a heat exchange unit 30, a gasification treatment unit 40, a fuel gas recovery section 50, and a power generation unit 60.

In the supercritical gasification apparatus, the feedstock supply unit 20 feeds out, at high pressure, a feedstock slurry regulated by the feedstock regulation unit 10 to a low-temperature-side flow channel 31a of a heat exchanger 31 included in the heat exchange unit 30. The feedstock slurry heated by the heat exchange unit 30 is then further heated by the gasification treatment unit 40 and is brought into a supercritical state. Organic matter contained in the feedstock slurry is thus decomposition-treated to produce fuel gas such as methane, ethane, ethylene and the like.

Treated fluid in a supercritical state is introduced to a high-temperature-side flow channel 31b of the heat exchanger 31, and exchanges heat with the feedstock slurry. This heat exchange brings the treated fluid into a subcritical state, and changes the treated fluid into a gas-liquid two-phase flow. Then, in the middle of the high-temperature-side flow channel 31b, the treated fluid in the subcritical state is extracted from the heat exchanger 31, and is gas-liquid separated by the fuel gas recovery section 50. The liquid that has been gas-liquid separated is then returned to the high-temperature-side flow channel 31b of the heat exchanger 31, and is used in heat exchange with the feedstock slurry. On the other hand, the gas (fuel gas) that has been gas-liquid separated is recovered in the fuel gas recovery section 50 and is used as power of the power generation unit.

Explanation follows regarding each section of the supercritical gasification apparatus.

The feedstock regulation unit 10 is a section that regulates feedstock slurry from a gasification feedstock or the like, and includes a regulation tank 11 and a crusher 12.

The regulation tank 11 is a container that mixes the gasification feedstock, activated carbon, water and the like to produce a suspension, and is provided with stirring blades, not shown in the drawings. As the gasification feedstock, Shochu residue, egg-laying hen droppings, or sludge, for example, may be employed. The activated carbon functions as a non-metal catalyst, and porous particles of activated carbon having an average particle diameter of 200 µm or less may be employed therefor.

The crusher 12 is a device that crushes solid components (primarily the gasification feedstock) contained in the suspension mixed in the regulation tank 11, so as to make the solid components into a uniform size. In the present embodiment, crushing is performed such that the average particle diameter of the solid components becomes 500 µm or less. The suspension becomes a feedstock slurry by crushing with the crusher 12.

The feedstock supply unit 20 is a section that feeds the feedstock slurry out at high pressure, and includes a supply pump 21 and a high pressure pump 22. The supply pump 21 is a device for supplying the feedstock slurry fed out from the crusher 12 toward the high pressure pump 22. The high pressure pump 22 is a device for feeding the feedstock slurry out at high pressure. The feedstock slurry is pressurized by the high pressure pump 22 to a pressure of approximately 25 MPa.

The heat exchange unit 30 is a section that causes heat exchange to be performed between the feedstock slurry supplied from the feedstock supply unit 20 and the treated fluid that has been decomposition-treated by the gasification treatment unit 40, such that the feedstock slurry is heated while the treated fluid is cooled. The heat exchange unit 30 includes a heat exchanger 31, a depressurizing mechanism 32, and a cooler 33.

The heat exchanger 31 is a device that causes heat exchange to be performed between the feedstock slurry and the treated fluid, and a double-pipe structure is employed therefor. An inner flow channel is employed as the low-temperature-side flow channel 31a through which the feedstock slurry flows, and an outer flow channel is employed as the high-temperature-side flow channel 31b through which the treated fluid flows. In the present embodiment, the treated fluid is introduced at a temperature of approximately 600°C and is discharged at a temperature of approximately 120°C. On the other hand, the feedstock slurry is introduced at a temperature of room temperature and discharged at a temperature of approximately 450°C. Note that explanation regarding the heat exchanger 31 is given later.

The depressurizing mechanism 32 is a device that depressurizes the treated fluid discharged from the heat exchanger 31. The cooler 33 is a device that cools the treated fluid discharged from the depressurizing mechanism 32. By the depressurizing mechanism 32 and the cooler 33, the treated fluid discharged from the cooler 33 (a mixture of discharged water, activated carbon, and ash) is depressurized and cooled to approximately room temperature and pressure.

The gasification treatment unit 40 is a section that heats and pressurizes the feedstock slurry heated by the heat exchanger 31 until the feedstock slurry reaches a supercritical state, and decomposes organic matter contained in the feedstock slurry. The gasification treatment unit 40 includes a preheater 41 and a gasification reactor 42. The preheater 41 is a device that preheats the feedstock slurry discharged from the heat exchanger 31. In the present embodiment, feedstock slurry introduced at approximately 450°C is heated to approximately 600°C. The gasification reactor 42 is a device that maintains the feedstock slurry in a supercritical state so as to decompose organic matter contained in the feedstock slurry. In the present embodiment, decomposition-treatment is performed on the feedstock slurry for a duration of from 1 minute to 2 minutes, with the temperature set to 600°C and the pressure set to 25 MPa.

The fuel gas recovery section 50 is a section that recovers fuel gas from the treated fluid, and includes a gas-liquid separator 51, a flow rate adjusting mechanism 52, and a gas tank 53. The gas-liquid separator 51 is a section that separates treated fluid in a subcritical state extracted from the middle of the high-temperature-side flow channel 31b of the heat exchanger 31, into a gas (fuel gas) and a liquid (discharged water, activated carbon, and ash). The separated liquid is then returned to the middle of the high-temperature-side flow channel 31b, and the separated gas is supplied to the flow rate adjusting mechanism 52. Note that, the gas-liquid separator 51 will be described later.

The flow rate adjusting mechanism 52 is a mechanism that adjusts the feed flow rate of gas separated by the gas-liquid separator 51, and the gas tank 53 is a container that accumulates fuel gas after working in the power generation unit 60. The fuel gas accumulated in the gas tank 53 is then supplied as a part of the fuel of the preheater 41 and the gasification reactor 42 included in the gasification treatment unit 40.

The power generation unit 60 is a section that generates electrical power using the fuel gas as power, which has been recovered from the treated fluid, and includes a turbine 61 and a power generator 62. The turbine 61 is a device that rotates using the fuel gas as power, which has been separated by the gas-liquid separator 51. The turbine 61 of the present embodiment is rotated by a jet of highly pressurized fuel gas from the flow rate regulating device. The power generator 62 is a device that generates electrical power with the rotation of the turbine 61.

Next, extraction of fuel gas from the treated fluid using the heat exchanger 31 and the gas-liquid separator 51 is described.

The heat exchanger 31 is configured so as to be separated into a high-temperature-side section 31H and a low-temperature-side section 31L. Treated fluid in a high temperature and high pressure state (600°C, 25 MPa in the present embodiment) is introduced to the high-temperature-side section 31H, and exchanges heat with the feedstock slurry discharged from the low-temperature-side section 31L. On the other hand, room temperature feedstock slurry pressurized by the high pressure pump 22 is introduced to the low-temperature-side section 31L, and exchanges heat with the treated fluid (the liquid component) that has been gas-liquid separated.

The treated fluid that has exchanged heat in the high-temperature-side section 31H is lowered in temperature while being maintained at high pressure, and transitions to a subcritical state. For example, the temperature is lowered to approximately 300°C while maintaining the pressure at 25 MPa. When the temperature is lowered, the treated fluid is brought into a subcritical state and changes into a gas-liquid two-phase flow. As described above, the treated fluid in the subcritical state is then extracted from the high-temperature-side flow channel 31b of the heat exchanger 31, and is gas-liquid separated by the gas-liquid separator 51.

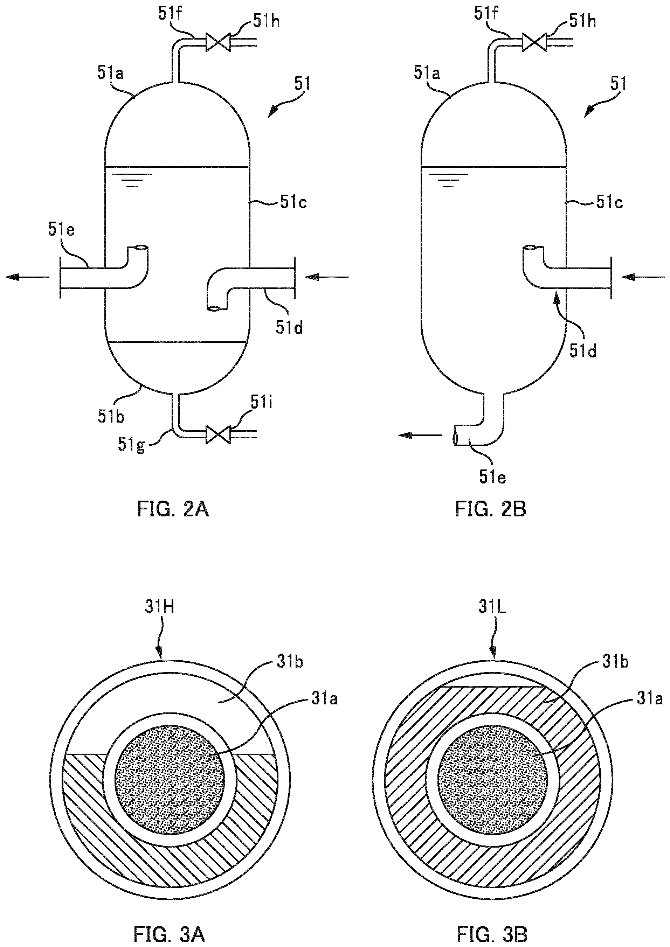

Fig. 2A is a vertical cross-section of the gas-liquid separator 51. The gas-liquid separator 51 given as an example is a sealed container having an upper end portion 51a and a lower end portion 51b that are both semi-spherical in shape, and an intermediate portion 51c that is a cylindrical shape. A fluid introduction portion 51d and a liquid discharge portion 51e are provided on a side face of the intermediate portion 51c. A gas discharge portion 51f is provided to the upper end portion 51a, and a drain 51g is provided to the lower end portion 51b.

The fluid introduction portion 51d is a pipe shaped member that communicates with the interior and exterior of the gas-liquid separator 51. An outside end portion of the fluid introduction portion 51d is connected to the high-temperature-side flow channel 31b provided to the high-temperature-side section 31H, through piping 31c (see Fig. 1). The liquid discharge portion 51e is also a pipe shaped member that communicates with the interior and exterior of the gas-liquid separator 51. An outside end portion of the liquid discharge portion 51e is connected to the high-temperature-side flow channel 31b provided to the low-temperature-side section 31L, through piping 31d (see Fig. 1).

The gas discharge portion 51f is configured by piping having a base end that is communicated with a space inside the gas-liquid separator 51, and a leading end thereof is provided with an opening and closing valve 51h. The gas discharge portion 51f is communicated with a flow rate adjusting mechanism 52 through piping. The drain 51g is also configured with piping having a base end that is communicated with the space inside the gas-liquid separator 51, and a leading end portion thereof is provided with a drain valve 51i

In the gas-liquid separator 51, treated fluid (a gas-liquid two-phase flow) discharged from the high-temperature-side section 31H flows into the space inside the gas-liquid separator 51. In the interior space, treated fluid is separated into a liquid component (activated carbon, water, and ash) and a gas component (fuel gas). The gas component then rises, becomes fuel gas, and flows from the upper end portion 51a into the gas discharge portion 51f. The fuel gas is subsequently supplied to the flow rate adjusting mechanism 52. Note that pressure regulation is not performed by the gas-liquid separator 51. Fuel gas is thus supplied to the flow rate adjusting mechanism 52 at a high pressure of approximately 25 MPa.

The flow rate adjusting mechanism 52 blows the high pressure fuel gas onto the turbine 61 while adjusting the flow rate, and thereby rotates the turbine 61 without burning the fuel gas. The energy of pressure possessed by the fuel gas can be converted into electrical power since the power generator 62 generates electrical power by the rotation of the turbine 61. The fuel gas after working is then accumulated in the gas tank 53.

On the other hand, the separated liquid component fills up the interior space of the gas-liquid separator 51 from the lower side thereof, and is discharged from the liquid discharge portion 51e. Note that, although activated carbon and ash are contained in the liquid component, the activated carbon and ash precipitate due to having a higher specific gravity than water, and the activated carbon and ash are collected in the lower end portion 51b of the interior space. This enables activated carbon and ash to be reduced in the liquid portion that is discharged from the liquid discharge portion 51e. Moreover, opening the drain valve 51i enables the activated carbon and ash accumulated in the gas-liquid separator 51 to be recovered. Moreover, the gas-liquid separator 51 may be configured such that an end portion of the liquid discharge portion 51e is connected to a bottom portion of the lower end portion 51b as illustrated in Fig. 2B, and the activated carbon and ash are not recovered.

A liquid component from which the fuel gas, activated carbon, and ash have been removed is thus discharged from the liquid discharge portion 51e. For the sake of convenience in the following description, the liquid component from which the fuel gas, activated carbon, and ash have been removed is referred to as the treated fluid discharged from the gas-liquid separator 51. The treated fluid is used to heat the feedstock slurry in the low-temperature-side section 31L of the heat exchanger 31.

As illustrated in Fig. 3A, in the high-temperature-side section 31H of the heat exchanger 31, gas of the treated fluid in a subcritical state has tended to be collected in an upper portion of the high-temperature-side flow channel 31b, and this has impaired the heat exchange efficiency with the feedstock slurry. On the other hand, gas has been removed from the treated fluid discharged from the gas-liquid separator 51. Therefore, as illustrated in Fig. 3B, the treated fluid fills the entire high-temperature-side flow channel 31b, and highly efficient heat exchange with the feedstock slurry flowing through the low-temperature-side flow channel 31a is achieved. This enables the feedstock slurry to be efficiently heated in the low-temperature-side section 31L of the heat exchanger 31.

As is apparent from the above description, in the supercritical gasification apparatus of the present embodiment, treated fluid in a subcritical state is extracted from the high-temperature-side flow channel 31b (the outer flow channel) provided to the high-temperature-side section 31H of the heat exchanger 31, and is gas-liquid separated. The high pressure fuel gas that has been gas-liquid separated is then utilized as the power of the turbine 61, enabling the pressure energy possessed by the fuel gas to be effectively utilized. Moreover, the fuel gas after working can then be effectively utilized as fuel for the gasification treatment unit 40.

Moreover, the treated fluid that has been gas-liquid separated is returned to the high-temperature-side flow channel 31b (the outer flow channel) provided to the low-temperature-side section 31L, enabling more efficient heat exchange between the returned treated fluid and the feedstock slurry. Moreover, blockages in the heat exchanger 31 caused by tar can be suppressed due to being able to remove the tar in the gas-liquid separation process.

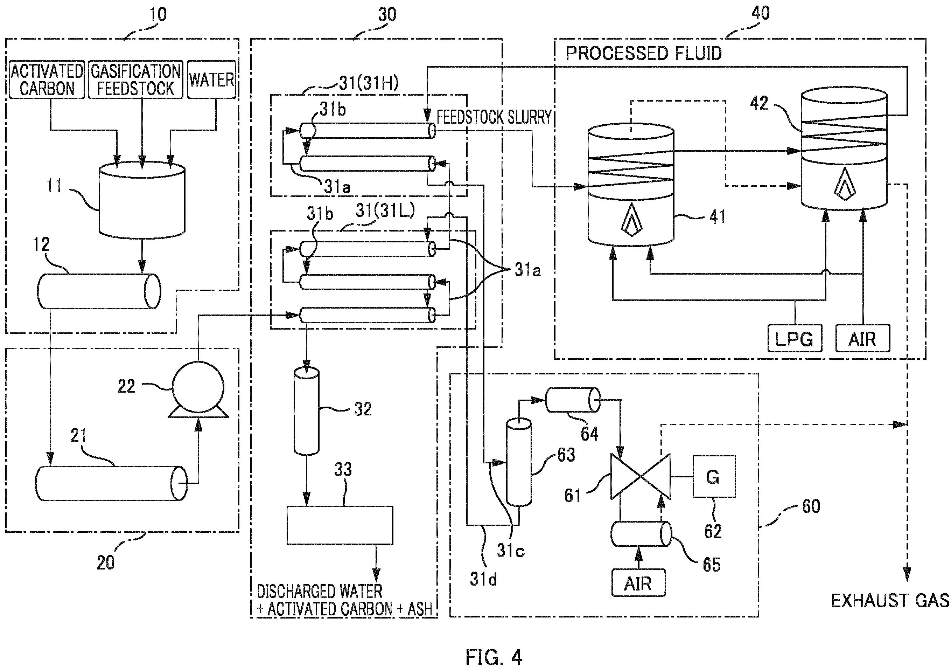

Next, a modified example of the supercritical gasification apparatus is described with reference to Fig. 4. In the modified example, the configuration of the power generation unit 60 differs from that in the embodiment described above. Note that, the configurations of the feedstock regulation unit 10, the feedstock supply unit 20, the heat exchange unit 30 and the gasification treatment unit 40 are the same as those of the embodiment described above, and thus explanation thereof is omitted.

In the modified example of Fig. 4, the fuel gas after rotating the turbine 61 is burned and is utilized to rotate the turbine 61. Namely, the power generation unit 60 includes the turbine 61, the power generator 62, the gas-liquid separator 63, the flow rate adjusting mechanism 64, and a burner 65. Note that, the gas-liquid separator 63 and the flow rate adjusting mechanism 64 are configured the same as the gas-liquid separator 51 and the flow rate adjusting mechanism 52 in the embodiment described above.

In the modified example, the fuel gas after rotating the turbine 61 with its pressure is then burned in the burner 65, and is reused as power of the turbine 61. This enables the chemical energy possessed by the fuel gas to also be used to rotate the turbine 61, and enables highly efficient power generation.

The embodiment described above is to facilitate understanding of the present invention, and does not limit the present invention. The present invention may be modified and improved without departing from the gist thereof, and the present invention includes equivalents thereof.

For example, in the first embodiment described above, it is configured such that the gasification feedstock that has exchanged heat in the heat exchange unit 30 is then heated by burning the fuel gas. However, the gasification feedstock may be heated by burning the fuel gas before exchanging heat in the heat exchange unit 30.

Moreover, although it is configured such that exhaust gas is released in each of the embodiments described above, the exhaust gas may be used as a heat source for the gasification feedstock. Energy possessed by the fuel gas can be more effectively utilized since the exhaust gas also includes thermal energy.

### [Reference Signs List]

10: feedstock regulation unit, 11: regulation tank, 12: crusher, 20: feedstock supply unit, 21: supply pump, 22: high pressure pump, 30: heat exchange unit, 31: heat exchanger, 31H: high-temperature-side section of heat exchanger, 31L: low-temperature-side section of heat exchanger, 31a: low-temperature-side flow channel of heat exchanger, 31b: high-temperature-side flow channel of heat exchanger, 31c: connecting pipe, 31d: connecting pipe, 32: depressurizing mechanism, 33: cooler, 40: gasification treatment unit, 41: preheater, 42: gasification reactor, 50: fuel gas recovery section, 51: gas-liquid separator, 51a: upper end portion of gas-liquid separator, 51b: lower end portion of gas-liquid separator, 51c: intermediate portion of gas-liquid separator, 51d: fluid introduction portion, 51e: liquid discharge portion, 51f: gas discharge portion, 51g: drain, 51h: opening and closing valve of gas discharge portion, 51i: drain valve, 52: flow rate adjusting mechanism, 53: gas tank, 60: power generation unit, 61: turbine, 62: power generator, 63: gas-liquid separator, 64: flow rate adjusting mechanism; 65: burner

## Claims

1. A gasification apparatus configured to heat and pressurize a gasification feedstock to bring the gasification feedstock into a supercritical state, and perform decomposition-treatment on the gasification feedstock to obtain fuel gas, the gasification apparatus comprising:
a heat exchanger configured to introduce the gasification feedstock into a low-temperature-side flow channel and introduce treated fluid in a supercritical state into a high-temperature-side flow channel, so that heat exchange is performed between the gasification feedstock and the treated fluid;
a gas-liquid separator configured to extract, from the high-temperature-side flow channel, the treated fluid that has been in a subcritical state due to heat exchange, perform gas-liquid separation on the treated fluid, and return a separated liquid to the high-temperature-side flow channel; and
a turbine that is powered by fuel gas separated by the gas-liquid separator.

2. The gasification apparatus according to claim 1, wherein
the turbine is rotated by a jet of the fuel gas in a highly pressurized state.

3. The gasification apparatus according to claim 1, wherein
the turbine is rotated by a jet of the fuel gas that has been burned in a highly pressurized state.

4. The gasification apparatus according to claim 2, wherein
the fuel gas after rotating the turbine is used to heat the gasification feedstock.

5. The gasification apparatus according to claim 2, wherein
the fuel gas after rotating the turbine is burned to be used to rotate the turbine.

6. The gasification apparatus according to claim 3 or claim 5, wherein
exhaust gas that is obtained by burning the fuel gas and that has been used to rotate the turbine is used to heat the gasification feedstock.
